# EUROPÄISCHE PATENTANMELDUNG

(11) **EP 1 541 395 A1**
(43) Veröffentlichungstag der Anmeldung: **15.06.2005**
(21) Anmeldenummer: 03104607.1
(22) Anmeldetag: 09.12.2003
(51) Int. Cl.: B60H 1/34

(54) **Lüftungsauslass für ein Kraftfahrzeug**

(71) Anmelder: Ford Global Technologies, LLC, A subsidary of Ford Motor Company, Dearborn, MI 48126 (US)
(72) Erfinder: Fischer, Dietmar, 50733 Köln (DE)
(74) Vertreter: Drömer, Hans-Carsten, Dr.-Ing.

(57) **Zusammenfassung**

Die Erfindung betrifft einen einstellbaren Lüftungsauslaß für ein Kraftfahrzeug mit mehreren Leitschaufeln (20a-20e), die um parallele Achsen (23) schwenkbeweglich sind. Die Leitschaufeln greifen mit Zapfen jeweils in Führungsschlitze (32a-32e) einer Kulissenplatte (30) ein, so daß die relative Ausrichtung der Leitschaufeln durch eine Verschiebebewegung der Kulissenplatte verändert werden kann. Unabhängig davon läßt sich vorzugsweise die Winkelausrichtung der Leitschaufeln durch einen Schieber (15) synchron verstellen.

## Beschreibung

Die Erfindung betrifft einen einstellbaren Lüftungsauslaß für ein Kraftfahrzeug mit einem Gehäuserahmen und einer Anzahl in diesem drehbeweglich angeordneter Leitschaufeln.

Ein Lüftungsauslaß für ein Kraftfahrzeug der eingangs genannten Art ist aus der US 5 063 833 bekannt. Dabei sind in einem kastenförmigen Gehäuserahmen eine Reihe von Leitschaufeln um zueinander parallele Schwenkachsen drehbar gelagert. An der Außenseite des Gehäuses führen mit den Achsen der Leitschaufeln verbundene Hebel mit an ihren Enden angeordneten Zapfen zu einer Kulissenplatte, in deren Führungsschlitze die Zapfen jeweils eingreifen. Eine motorgesteuerte Verschiebung der Kulissenplatte in eine Richtung senkrecht zu den Schwenkachsen der Leitschaufeln bewegt dann die Zapfen in den Führungsschlitzen entlang vorgegebener Bahnen, wodurch die Leitschaufeln jeweils eine individuelle, von der Position der Kulissenplatte abhängige Ausrichtung erhalten. Problematisch bei diesem Lüftungsauslaß ist, daß die außerhalb des Gehäuserahmens vorgesehene Kulissensteuerung der Leitschaufeln verhältnismäßig aufwändig in ihrer Montage ist. Ferner ist sie konstruktiv instabil und somit im Betrieb störungsanfällig.

Vor diesem Hintergrund war es eine Aufgabe der vorliegenden Erfindung, einen einfacher zu montierenden und robusteren Lüftungsauslaß für ein Kraftfahrzeug bereitzustellen.

Diese Aufgabe wird durch einen einstellbaren Lüftungsauslaß mit den Merkmalen des Anspruchs 1 gelöst. Vorteilhafte Ausgestaltungen sind in den Unteransprüchen enthalten.

Der erfindungsgemäße einstellbare Lüftungsauslaß für ein Kraftfahrzeug enthält die folgenden Komponenten:
a) Einen Gehäuserahmen mit einer Lufteinlaßseite und einer Luftauslaßseite. Der Gehäuserahmen kann insbesondere eine im Wesentlichen rechteckige Grundflächenform aufweisen.
b) Eine Anzahl von (typischerweise drei bis sieben) Leitschaufeln zur Lenkung des Luftstroms durch den Gehäuserahmen, wobei die Leitschaufeln jeweils drehbeweglich um eine individuelle Schwenkachse in dem Gehäuserahmen montiert sind. Weiterhin weisen die Leitschaufeln jeweils eine senkrecht zu ihrer Schwenkachse verlaufende Ausnehmung auf, welche von einem stift- oder zapfenförmigen Element (im Folgenden "Zapfen" genannt) unterbrochen bzw. durchsetzt wird. Die mehreren Leitschaufeln sind dabei so im Gehäuserahmen montiert, daß ihre Schwenkachsen zueinander parallel stehen und daß ihre Ausnehmungen miteinander fluchten, d.h. auf derselben axialen Höhe in Bezug auf die Schwenkachsen liegen. Vorzugsweise liegen die Ausnehmungen etwa mittig in Bezug auf die Schwenkachsen.
c) Eine Kulissenplatte, welche im montierten Zustand senkrecht (in einer oder zwei Richtungen) zu den Schwenkachsen der Leitschaufeln verschiebebeweglich ist und zumindest teilweise die Ausnehmungen der Leitschaufeln durchsetzt bzw. darin gelagert ist. Weiterhin weist die Kulissenplatte pro Leitschaufel einen Führungsschlitz auf, in welchen jeweils der Zapfen einer Leitschaufel eingreift. Bei einer Verschiebebewegung der Kulissenplatte in einer Richtung senkrecht zu den Schwenkachsen der Leitschaufeln wird der Zapfen somit im jeweiligen Führungsschlitz zwangsgeführt, was eine entsprechende Drehbewegung der zugehörigen Leitschaufel um ihre Schwenkachse verursacht.

Der vorstehend definierte Lüftungsauslaß ermöglicht durch Vorgabe der Führungsschlitze in der Kulissenplatte quasi jede gewünschte relative Ausrichtung der Leitschaufeln zueinander, wobei die jeweilige Ausrichtung durch ein einfaches Verschieben der Kulissenplatte einstellbar ist. Von Vorteil ist dabei, daß die Kulissenplatte unmittelbar an den Leitschaufeln angreift, so daß kein aufwändiges, aus dem Gehäuserahmen herausführendes Gestänge oder dergleichen für diese Anbindung erforderlich ist. Die Leitschaufeln können vielmehr in an sich bekannter Weise in den Gehäuserahmen eingesetzt und anschließend dort mit der Kulissenplatte verbunden werden.

Die Kulissenplatte ist vorzugsweise mit einem Betätigungselement gekoppelt, über das eine manuelle oder automatische (z.B. vom Aktuator einer Klimaanlage gesteuerte) Verschiebebewegung der Kulissenplatte in einer Richtung senkrecht zu den Schwenkachsen der Leitschaufeln möglich ist, so daß die Zapfen der Leitschaufeln in den Führungsschlitzen der Kulissenplatte verschoben werden. Dies erlaubt es in einfacher Weise, die durch die Kulissenplatte gegebene Ausrichtungsmöglichkeit der Leitschaufeln für eine gezielte Einstellung einzusetzen.

Die Führungsschlitze in der Kulissenplatte können im Prinzip jeden beliebigen Verlauf aufweisen und damit entsprechende relative Ausrichtungen der Leitschaufeln zueinander realisieren. Insbesondere können die Führungsschlitze in der Kulissenplatte so geformt sein, daß diese die Leitschaufeln zwischen einer zueinander parallelen und einer divergierenden Ausrichtung verstellen können, wobei die Divergenz der Ausrichtung auf den Luftstrom durch den Lüftungsauslaß bezogen ist. In der parallelen Ausrichtung bewirken die Leitschaufeln daher eine enge Bündelung bzw. Konzentration des austretenden Luftstroms, während diese in der divergierenden Ausrichtung für eine breite Verteilung bzw. Diffusion des Luftstromes sorgen. Weiterhin können die Führungsschlitze auch so geformt sein, daß eine konvergierende Ausrichtung der Leitschaufeln möglich ist, wodurch eine noch stärkere Konzentration des Luftstroms zu einer Art Punktstrahl ermöglicht wird.

Die Führungsschlitze in der Kulissenplatte sind vorzugsweise einseitig offen, so daß von dieser Seite her der jeweilige Zapfen einer Leitschaufel in den Führungsschlitz eingeführt werden kann. Gemäß einer bevorzugten Ausführungsform sind dabei die Führungsschlitze in ihrem randseitigen Öffnungsbereich verengt ausgebildet, so daß das beschriebene Einführen der Zapfen gegen einen gewissen Widerstand erfolgen muß. Dieser Widerstand verhindert dann, daß die Zapfen später in unerwünschter Weise von selbst die Führungsschlitze der Kulissenplatte wieder verlassen.

Der an den Leitschaufeln jeweils vorgesehene, die Ausnehmung durchgreifende Zapfen ist vorzugsweise als ein Randsteg der Ausnehmung ausgebildet. D.h., daß die Ausnehmung in der Ebene der jeweiligen Leitschaufel so dicht bis an den Rand der Leitschaufel führt, daß der verbleibende Materialstreifen den gewünschten Zapfen bildet.

Gemäß einer Weiterbildung des Lüftungsauslasses ist an mindestens einer der Leitschaufeln ein Bedienelement vorgesehen, mit welchem eine Einstellung des Drehwinkels der Leitschaufel in Bezug auf ihre Schwenkachse vorgenommen werden kann. Da die so verstellte Leitschaufel über ihren Zapfen mit der Kulissenplatte in Wirkverbindung steht, führt ihre Schwenkbewegung zu einer entsprechenden Verschiebebewegung der Kulissenplatte, welche dabei wiederum die übrigen Leitschaufeln mitnimmt. Auf diese Weise kann durch eine an einer ersten Leitschaufel ausgeführte Schwenkbewegung ein synchrones Verschwenken der übrigen Leitschaufeln erfolgen. Die dabei von den Leitschaufeln relativ zueinander angenommene Ausrichtung, z. B. parallel oder divergierend, bleibt bei einer solchen Schwenkbewegung im Wesentlichen erhalten, da sich die Kulissenplatte nicht in ihrer primären Verschieberichtung bewegt, d.h. die Zapfen nicht entlang der Führungsschlitze gleiten.

Der Gehäuserahmen kann in jeder diesbezüglich in dem Stand der Technik bekannten Weise ausgestaltet sein. Insbesondere kann der Gehäuserahmen an der Luftaustrittseite parallel zu den Leitschaufeln verlaufende Luftleitstege aufweisen und/oder senkrecht zu den Leitschaufeln verlaufende Luftleitstege aufweisen, die jeweils einstellbar oder auch feststehend sein können.

Des Weiteren kann der Gehäuserahmen Gelenkelemente für eine drehbewegliche Lagerung aufweisen. Z. B. können an zwei gegenüberliegenden Seitenflächen Gelenkzapfen vorgesehen sein, mit denen der Gehäuserahmen schwenkbeweglich um die Verbindungsachse der Gelenkzapfen in entsprechenden Gelenkbuchsen am Armaturenbrett eines Kraftfahrzeuges gelagert werden kann. Auf diese Weise läßt sich der komplette Lüftungsauslaß unter Beibehaltung der inneren Konfiguration der Leitschaufeln bewegen, um den austretenden Luftstrom nach Wunsch eines Benutzers zu lenken.

In einer weiteren Ausführungsform der Erfindung kann zusätzlich zu dem vorstehend beschriebenen Leitschaufelmechanismus ein entsprechender analoger Mechanismus mit Querleitschaufeln senkrecht zu den Leitschaufeln angeordnet sein. Dadurch kann die Kontraktion bzw. Diffusion in zwei Ebenen gesteuert werden, wobei die Leit- bzw. Querleitschaufeln ineinander greifen oder nacheinander angeordnet sein können. Beispielsweise können zusätzliche Querlamellen drehbar im Gehäuse gelagert und vor den vorstehend beschriebenen Lamellen angeordnet sein, wobei der zugehörige Verstellmechanismus außerhalb des Gehäuses angeordnet sein kann.

Im Folgenden wird die Erfindung anhand der Figuren beispielhaft näher erläutert.

Es zeigen:
- Fig. 1: eine perspektivische Ansicht eines Gehäuserahmens;
- Fig. 2: eine Seitenansicht einer Leitschaufel;
- Fig. 3: eine Draufsicht der Kulissenplatte;
- Fig. 4: eine Draufsicht auf die in die vorgeschobene Kulissenplatte eingreifenden Leitschaufeln in einer divergierenden Ausrichtung;
- Fig. 5: eine Draufsicht auf die in die zurückgezogene Kulissenplatte eingreifenden Leitschaufeln in einer parallelen Ausrichtung, und
- Fig. 6: den gesamten Lüftungsauslaß in zurückgezogener Position der Kulissenplatte.

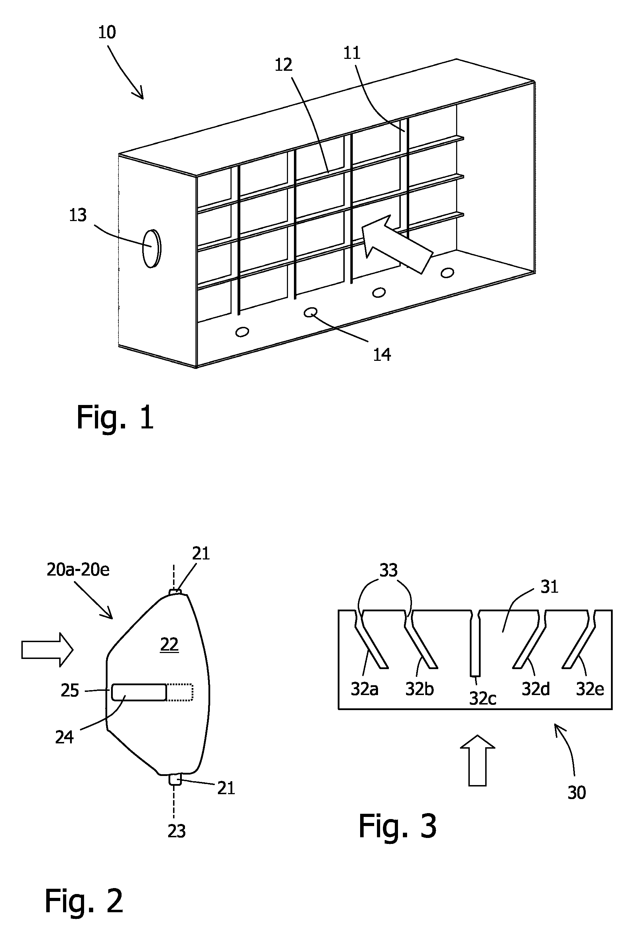

Figur 1 zeigt schematisch den Gehäuserahmen 10 eines erfindungsgemäßen Lüftungsauslasses für ein Kraftfahrzeug. Der Gehäuserahmen 10 ist im Wesentlichen rechteckig-rahmenförmig und weist eine Lufteintrittseite (in der Figur vorne) und eine Luftaustrittseite (hinten) auf. Die Richtung der Luftströmung beim Gebrauch des Lüftungsauslasses ist durch einen Blockpfeil angedeutet. Der gesamte Lüftungseinlaß einschließlich des Gehäuserahmens ist vorzugsweise aus Kunststoff hergestellt.

Die dem Fahrgastraum zugewandte Luftaustrittseite ist im dargestellten Beispiel durch ein Gitter aus vertikalen Luftleitstegen 11 und horizontalen Luftleitstegen 12 abgedeckt. Die Luftleitstege 11, 12 können in nicht näher dargestellter Weise selbst noch ausrichtbar sein und/oder Bedienelemente wie Knöpfe oder Schieber tragen, mit denen die nachfolgend noch zu erläuternden Komponenten (Leitschaufeln, Kulissenplatte) bewegt werden können.

Ferner ist in Figur 1 einer von zwei sich gegenüberliegenden Gelenkzapfen 13 zu erkennen, mit deren Hilfe der Gehäuserahmen 10 insgesamt schwenkbeweglich in einer entsprechenden Öffnung des Armaturenbrettes gelagert werden kann. Durch das Verschwenken des kompletten Gehäuserahmens kann somit eine Grobausrichtung des austretenden Luftstromes erfolgen.

Schließlich sind an der unteren inneren Rahmenseite des Gehäuserahmens 10 fünf Buchsen 14 erkennbar, welche der Aufnahme der Gelenkzapfen 21 von fünf Leitschaufeln 20a-20e (Figur 2) dienen. Entsprechende Buchsen sind auch an der oberen Innenseite des Gehäuserahmens 10 ausgebildet (in Figur 1 nicht sichtbar).

Figur 2 zeigt in einer Seitenansicht eine der fünf in den Gehäuserahmen 10 einzusetzenden Leitschaufeln 20a-20e, wobei ein Blockpfeil wiederum die Richtung der Luftströmung anzeigt. Bei der Leitschaufel handelt es sich um eine im Wesentlichen ebene Platte 22, welche an gegenüberliegenden Ecken die bereits erwähnten Gelenkzapfen 21 aufweist, mit deren Hilfe die Leitschaufel schwenkbeweglich um eine Schwenkachse 23 im Gehäuserahmen 10 montiert werden kann. Des Weiteren weist die Leitschaufel eine rechteckige Ausnehmung 24 auf, welche sich auf mittlerer Höhe etwa senkrecht zur Schwenkachse 23 erstreckt. Die Ausnehmung 24 verläuft bis nahe an einen Rand (den im montierten Zustand der Lufteinlaßseite des Gehäuserahmens 10 zugewandten Rand), so daß dort nur ein schmaler Steg bzw. ein Zapfen 25 übrig bleibt. Alternativ könnte dieser Zapfen auch an einer anderen Stelle entlang der Ausnehmung 24 vorgesehen sein, wobei er jedoch zur Erzielung einer guten Hebelwirkung einen gewissen Abstand zur Schwenkachse 23 haben sollte.

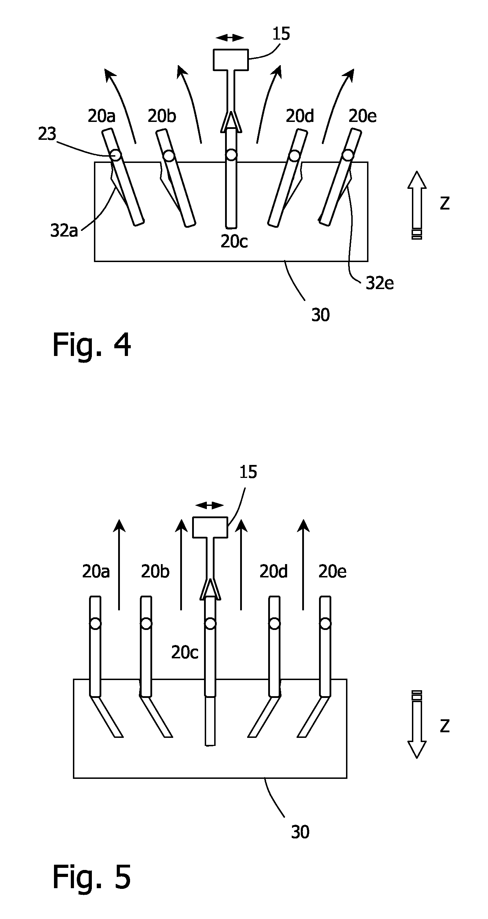

Figur 3 zeigt in einer Draufsicht die Kulissenplatte 30, deren Funktion in Zusammenhang mit den Figuren 4 und 5 erläutert werden wird. Ein Blockpfeil zeigt auch hier die Richtung der Luftströmung an. Die Kulissenplatte 30 besteht aus einer im Wesentlichen rechteckigen Platte 31, in welcher von einer Längsseite her Führungsschlitze 32a-32e eingelassen sind. Der Verlauf der Führungsschlitze ist dabei symmetrisch zur Mittelachse der Kulissenplatte 30, wobei der mittlere Schlitz 32c in Richtung der Mittelachse verläuft, während die links bzw. rechts benachbarten Führungsschlitze 32a, 32b bzw. 32d, 32e unter einem Winkel geneigt zur Mittelachse hin verlaufen. Im Einzelnen kann der Verlauf der Führungsschlitze 32a-32e je nach dem gewünschten Ausrichtungsverhalten der Leitschaufeln jedoch auch beliebig anders festgelegt werden.

Des Weiteren ist in Figur 3 erkennbar, daß an den randseitigen Öffnungen der Führungsschlitze 32a-32e jeweils Verengungen 33 ausgebildet sind, welche einen Durchtritt der Zapfen 25 der Leitschaufeln 20 nur gegen einen gewissen Widerstand erlauben. Durch die Öffnungen der Führungsschlitze können die Leitschaufeln gegen den Widerstand der Verengungen 33 im Rahmen der Montage eingesetzt werden. Alternativ können die Führungsschlitze auch geschlossen ausgebildet sein, falls alle Teile in einem Spritzgußschritt (One-Shot-Verfahren) hergestellt sind.

In Figur 4 ist eine Aufsicht auf die Kulissenplatte 30 und die Leitschaufeln 20a-20e entsprechend deren montiertem Zustand gezeigt, wobei die Zapfen 25 der im Gehäuserahmen 10 montierten Leitschaufeln 20a-20e jeweils in einen der Führungsschlitze 32a-32e eingreifen. Da die Schwenkachsen 23 der Leitschaufeln 20 im montierten Zustand ortsfest sind, machen die Leitschaufeln bei einer Verschiebebewegung der Kulissenplatte 30 in Richtung des Pfeils Z eine Schwenkbewegung um die jeweilige Schwenkachse 23, deren Ausmaß durch den Verlauf der Führungsschlitze 32a-32e vorgeschrieben wird. Bei der in Figur 4 gezeigten vorgeschobenen Position der Kulissenplatte 30 wird dabei eine divergierende Ausrichtung der Leitschaufeln 20 angenommen, bei welcher diese den Luftstrom möglichst breit verteilen.

Mittels eines nicht näher dargestellten Aktuators bzw. Betätigungselementes kann die Kulissenplatte 30 in ihrer (primären) Verschieberichtung Z nach Belieben verstellt werden. Dies kann beispielsweise durch einen Benutzer von Hand geschehen oder auch von einer Klimaanlage automatisch ausgeführt werden.

Bei der in Figur 5 in einer gleichartigen Draufsicht dargestellten, vollständig zurückgezogenen Position der Kulissenplatte 30 nehmen die Leitschaufeln 20a-20e eine zueinander parallele Ausrichtung an, wodurch der Luftstrom verhältnismäßig eng gebündelt wird. Die Verengungen 33 (Figur 3) an den Öffnungen der Führungsschlitze verhindern in diesem Zustand, daß die Kulissenplatte 30 unbeabsichtigt ganz von den Leitschaufeln 20a-20e abfällt. Im Übrigen ist jedoch keine weitere Lagerung oder Fixierung der Kulissenplatte 30 erforderlich.

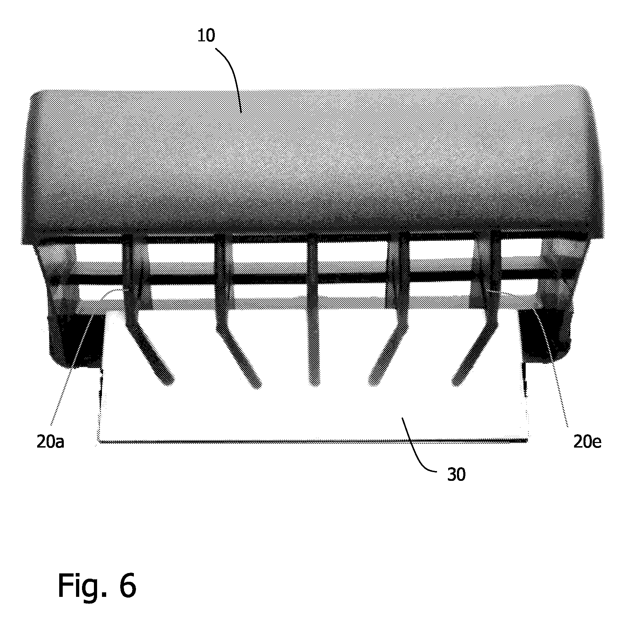

Figur 6 zeigt den zusammengebauten Lüftungsauslaß perspektivisch in einer zurückgezogenen Position der Kulissenplatte gemäß Figur 5.

In Figur 2 ist durch eine gestrichelte Linie angedeutet, daß sich die Ausnehmung 24 auch über eine größere Breite erstrecken kann. Eine solche größere Breite wird gemäß einer bevorzugten Ausgestaltung bei der mittleren Leitschaufel 20c realisiert und dient dazu, den Eingriff eines z. B. an einem Luftleitsteg 11 oder 12 des Gehäuserahmens 10 angebrachten Bedienungselementes 15 (Figur 4, 5) zu ermöglichen. Der Schieber 15 greift mit einem V-förmigen Ansatz an der mittleren Leitschaufel 20c an, so daß durch seine Verschiebung der Drehwinkel der Leitschaufel 20c relativ zu ihrer Schwenkachse 23 vom Benutzer nach Belieben eingestellt werden kann. Bei einer derartigen Einstellung nimmt die Leitschaufel 20c dann über die Kulissenplatte 30 die übrigen Leitschaufeln 20a, 20b, 20d, 20e mit, so daß diese eine synchrone Drehung ausführen. Bei der zugehörigen Bewegung der Kulissenplatte 30 behalten die Zapfen 25 ihr Position relativ zu den Führungsschlitzen 32a-32e im Wesentlichen bei, so daß sich die relative Ausrichtung der Leitschaufeln 20a-20e nicht ändert.

## Patentansprüche

1. Einstellbarer Lüftungsauslaß für ein Kraftfahrzeug, enthaltend
a) einen Gehäuserahmen (10) mit einer Lufteinlaßseite und einer Luftauslaßseite;
b) eine Anzahl von Leitschaufeln (20a-20e), welche jeweils drehbeweglich um eine Schwenkachse (23) in dem Gehäuserahmen (10) montiert sind und senkrecht zu den Schwenkachsen (23) verlaufende Ausnehmungen (24) mit einem die Ausnehmungen durchgreifenden Zapfen (25) aufweisen, wobei die Schwenkachsen (23) der Leitschaufeln zueinander parallel stehen und die Ausnehmungen (24) der Leitschaufeln fluchten;
c) eine senkrecht zu den Schwenkachsen (23) der Leitschaufeln verschiebebewegliche und in den Ausnehmungen (24) der Leitschaufeln gelagerte Kulissenplatte (30) mit Führungsschlitzen (32a-32e), in welche jeweils ein Zapfen (25) der Leitschaufeln eingreift.

2. Lüftungsauslaß nach Anspruch 1,
**dadurch gekennzeichnet, daß**
die Kulissenplatte (30) mit einem Betätigungselement für eine manuelle oder automatische Verschiebung gekoppelt ist.

3. Lüftungsauslaß nach Anspruch 1 oder 2,
**dadurch gekennzeichnet, daß**
die Führungsschlitze (32a-32e) in der Kulissenplatte (30) derart geformt sind, daß diese die Leitschaufeln (20a-20e) zwischen einer parallelen und einer divergierenden Ausrichtung oder einer parallelen und einer konvergierenden Ausrichtung oder einer konvergierenden und einer divergierenden Ausrichtung verstellen können.

4. Lüftungsauslaß nach mindestens einem der Ansprüche 1 bis 3,
**dadurch gekennzeichnet, daß**
die Führungsschlitze (32a-32e) an ihrer randseitigen Öffnung eine Verengung (33) aufweisen.

5. Lüftungsauslaß nach mindestens einem der Ansprüche 1 bis 4,
**dadurch gekennzeichnet, daß**
der Zapfen der Leitschaufeln (20) als Randsteg (25) der Ausnehmung (24) ausgebildet ist.

6. Lüftungsauslaß nach mindestens einem der Ansprüche 1 bis 5,
**dadurch gekennzeichnet, daß**
an einer der Leitschaufeln (20c) ein Bedienelement (15) für eine Einstellung des Drehwinkels der Leitschaufel (20c) um ihre Schwenkachse (23) vorgesehen ist.

7. Lüftungsauslaß nach mindestens einem der Ansprüche 1 bis 6,
**dadurch gekennzeichnet, daß**
der Gehäuserahmen (10) an der Luftauslaßseite parallel zu den Leitschaufeln (20) verlaufende Luftleitstege (11) und/oder senkrecht zu den Leitschaufeln (20) verlaufende Luftleitstege (12) aufweist.

8. Lüftungsauslaß nach mindestens einem der Ansprüche 1 bis 7,
**dadurch gekennzeichnet, daß**
der Gehäuserahmen (10) Gelenkelemente (13) für eine drehbewegliche Lagerung aufweist.

9. Lüftungsauslaß nach mindestens einem der Ansprüche 1 bis 8,
**dadurch gekennzeichnet, daß**
in Strömungsrichtung vor oder hinter den Leitschaufeln eine Mehrzahl schwenkbarer Querleitschaufeln vorgesehen ist, deren Schwenkachse im Wesentlichen senkrecht zu der Schwenkachse der Leitschaufeln verläuft, wobei die Querleitschaufeln über eine senkrecht zu diesen verschiebebewegliche und in Ausnehmungen der Querleitschaufeln gelagerte Querkulissenplatte verstellbar sind, wobei die Querkulissenplatte Führungsschlitze aufweist, in welche jeweils ein Zapfen der Querleitschaufeln eingreift.

10. Lüftungsauslaß nach Anspruch 10,
**dadurch gekennzeichnet, daß**
die Leitschaufeln und die Querleitschaufeln ineinander greifend ausgebildet sind.
